# EUROPEAN PATENT SPECIFICATION

(11) **EP 2 334 828 B1**
(45) Date of publication and mention of the grant of the patent: **15.08.2012**
(21) Application number: 09787163.6
(22) Date of filing: 10.09.2009
(51) Int. Cl.: C13B 30/02, B01D 9/00

(54) **CONTINUOUS VACUUM PAN**
VERDAMPFUNGSKRISTALLISATIONSTURM
CUISEUR SOUS VIDE EN CONTINU

(30) Priority: 01.10.2008 ZA 200808362
(43) Date of publication of application: 22.06.2011
(73) Proprietor: Tongaat Hulett Limited, Amanzimnyama Hill 4400 Tongaat (ZA)
(72) Inventor: LOVE, David John, 4051 Durban North (ZA); PEACOCK, Stephen David, 4126 Athlone Park (ZA)
(74) Representative: Haley, Stephen
(86) International application number: PCT/IB2009/053961
(87) International publication number: WO 2010/038160

(56) References cited:
- EP-A2- 0 065 775
- EP-A2- 0 201 629
- EP-A2- 0 403 441
- WO-A1-01/91875
- WO-A1-2007/113849
- WO-A1-2009/049391
- GB-A- 2 147 217
- HELUANE ET AL: "Enhancing sugar cane process performance through optimal production scheduling" CHEMICAL ENGINEERING AND PROCESSING, ELSEVIER SEQUOIA, LAUSANNE, CH LNKD- DOI:10.1016/J.CEP.2006.05.015, vol. 46, no. 3, 6 December 2006 (2006-12-06), pages 198-209, XP005794206 ISSN: 0255-2701

## Description

### BACKGROUND OF THE INVENTION

THIS invention relates to a continuous vacuum pan for use in the sugar processing industry, and more particularly but not exclusively, to a vertical, double calandria, continuous vacuum pan.

In this specification the term "calandria" shall be interpreted to mean a shell and tube reboiler commonly used in continuous pans found in the sugar processing industry. The calandria may generally be of a floating or a fixed configuration, as is known in the art.

During one particular stage of the sugar production process, syrup produced by evaporators (or molasses) is concentrated further in specially designed vessels known as pans. As the concentration rises the dissolved sugar crystallises and the function of the pan is to grow sugar crystals (from the sucrose in solution) in several steps to maximise the amount of sucrose recovered in raw sugar. It will be appreciated that this is a crucial step in the sugar production process, and hence much attention has been given to the design of pans, and in particular continuous vacuum pans, in recent times.

A vacuum pan is essentially a vessel, operated under vacuum, in which sugar syrup or molasses is boiled in order to increase the sugar concentration, and thus resulting in the growth of sugar crystals in the two-phase mixture of crystals and the mother liquor from which they are crystallizing (so called massecuite). A calandria is generally used as a reboiler to heat and evaporate the syrup, and also to cause circulation of massecuite inside the vessel. Steam is supplied to the calandria via a steam inlet, and is conveyed between the tubes of the calandria, thus resulting in effective heat transfer from the calandria to the massecuite contained within the tubes. One particular continuous vacuum pan design is disclosed in the applicant's own prior patent, US6,991,708.

Energy efficiency is of critical importance in sugar factory design and operation, particularly for those factories that consume large quantities of fossil fuels (for example, stand-alone sugar refineries). The installation of continuous pans, as opposed to batch pans, facilitates energy savings, as the steady rate of steam consumption by these units leads to more efficient operation than with conventional batch pan technology. In addition, continuous pans may readily be operated using lower pressure vapour supplies than can be used in batch pans. This allows for more efficient integration of pan boiling operations into the energy scheme of the factory.

To further enhance the energy efficiency of a continuous pan, use has sometimes been made of two separate vapour supplies within the same pan calandria. For example, some of the continuous pan compartments may be operated using vapour at a higher pressure, while other pan compartments requiring a lower rate of heat transfer may be operated using a second lower-pressure vapour supply. This design philosophy is generally implemented by using substantially separated vessels, in which each calandria is supplied by its own steam supply source.

A number of authors have furthermore shown that energy efficiency benefits may be achieved in a sugar factory by carrying out various pan boiling operations in a double-effect evaporation mode. In such an arrangement, the pan vapour from a first set of vacuum pans is used to boil a second set of pans operating at a lower absolute pressure. Either batch pans or continuous pans may be employed in this scheme, although the use of continuous pans would greatly simplify the operation. The disadvantage of these proposed arrangements is that they essentially comprise independent pans that are arranged in a cascaded configuration, which is not optimal from a cost, efficiency and space point of view.

It is therefore an object of the invention to provide a continuous vacuum pan that will, at least partially, overcome the above disadvantages.

It is also an object of the invention to provide a continuous vacuum pan that will be a useful alternative to existing vacuum pans.

It is a still further object of the invention to provide a continuous vacuum pan utilizing a vertical double calandria pan, and which also employs double effect pan boiling, which will result in substantial energy savings.

WO2007113849A WO 2009/49391, (which is relevant prior art under Article 54(3) EPC only), WO0191875A, GB2147217A, EP0403441A, EP0201629A, EP0065775A and HELUANE et al., "Enhancing sugar can process performance through optimal production scheduling", Chemical Engineering and Processing, vol. 46, No. 3, December 2006, all disclose a continuous vacuum pan comprising plural chambers in accordance with the preamble of claim 1.

### SUMMARY OF THE INVENTION

According to the invention there is provided a continuous vacuum pan including:
a vessel having a first enclosed chamber and a second enclosed chamber;
a first heat exchanger located in the first chamber, with a first vapour space defined in the first chamber above the first heat exchanger; and
a second heat exchanger located in the second chamber, with a second
vapour space defined in the second chamber above the second heat exchanger;
the first heat exchanger and the second heat exchanger both having heat transfer medium inlets;
characterised in that the heat exchangers are in the form of floating calandrias and the heat transfer medium inlet of the second heat exchanger is in flow communication with the first vapour space, in order for vapour contained in the first vapour space to be conveyed through the second heat exchanger as heat transfer medium.

There is provided for the inlet of the first heat exchanger to be in flow communication with an external high temperature heat transfer medium.

Preferably, the second enclosed chamber is operatively above the first enclosed chamber.

The heat transfer medium may be steam, or any other conventional vapour source used in pan boiling operations.

Preferably the continuous vacuum pan is the vacuum pan as disclosed in US 6,991,708, but with the steam supply configuration as described hereinbefore.

There is also provided for the two chambers to be isolated from one another, and to be operated at different pressures.

### BRIEF DESCRIPTION OF THE DRAWINGS

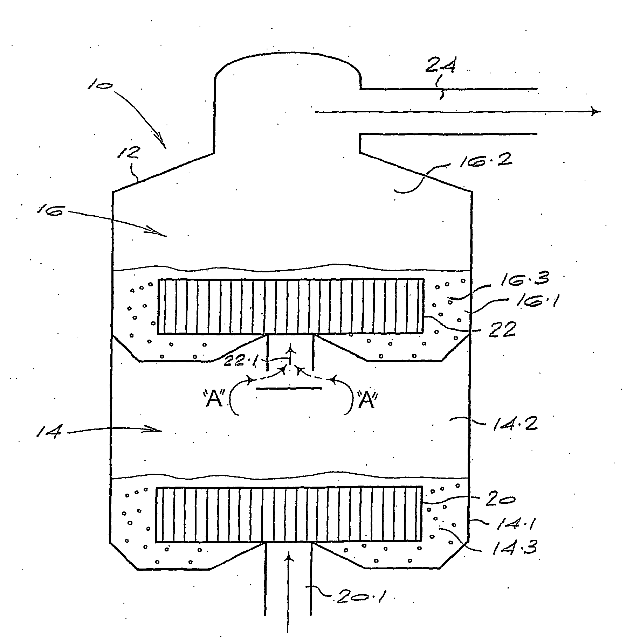

A preferred embodiment of the invention is described by way of a non-limiting example, and with reference to the accompanying figure showing a cross-sectional side view of a vacuum pan in accordance with one embodiment of the invention.

### DETAILED DESCRIPTION OF INVENTION

Referring to the drawings, in which like numerals indicate like features, a non-limiting example of a continuous vacuum pan in accordance with the invention is generally indicated by reference numeral 10.

The vacuum pan 10 comprises a single vessel 12 that is divided into a first chamber 14, being an operatively lower chamber, and a second chamber 16, being an operatively upper chamber disposed immediately above the first chamber 14.

The first chamber 14 includes a lower zone 14.1 for receiving a selected massecuite 14.3. A first heat exchanger or calandria 20 is located in the lower zone 14.1 in order to facilitate the transfer of heat to the massecuite 14.3. The first calandria 20 has an inlet 20.1 which is typically in flow communication with an external heat transfer medium, which may be an external supply of steam, or any other conventional vapour source as is known in the art. The vapour that evaporates from the massecuite 14.3 collects in a vapour space 14.2 of the first chamber 14.

Should there be a shortage of vapour generated in the vapour space 14.2 (less than is required in heat exchanger or calandria 22) then the vapour may be supplemented by steam from an external source (not shown). Similarly should there be a surplus of vapour in 14.2 then it may be diverted out to a condenser (by a connection to exit 24 - not shown)

The second chamber 16 also includes a lower zone 16.1 for receiving a selected massecuite 16.3. The massecuite in the second chamber 16 may be the same as the massecuite in the first chamber 14, but may also be of a different composition. For example, the first chamber may contain a first refinery massecuite, whereas the second chamber may contain a second refinery massecuite. A second heat exchanger or calandria 22 is located in the lower zone 16.1 of the second chamber 16 in order to facilitate the transfer of heat to the massecuite 16.3 in the second chamber 16.

The second calandria 22 also has a heat transfer medium inlet 22.1, but importantly, the inlet 22.1 is in flow communication with the vapour space 14.2 of the first chamber, as is indicated by arrow A. The vapour in the first chamber 14 is therefore utilized as a heat transfer medium in the second calandria 22, as opposed to the second calandria 22 being in flow communication with an external supply of heat transfer medium as is known in the art. Vapour collecting in the vapour space 16.2 of the second chamber 16 can subsequently be utilized in other process steps, or condensed in a separate condenser, as is commonly practiced.

The first chamber 14 and the second chamber 16 are isolated from one another, and can therefore advantageously be operated at different pressures. It is foreseen that the vapour space 14.2 of the first chamber 14 will be operated at a pressure that is higher than the pressure conventionally employed for such purposes, whereas the vapour space 16.2 of the second chamber 16 will be maintained at a pressure similar to that typically known in the art.

The continuous vacuum pan described above has a number of novel and advantageous features.

Firstly, the pan boiling operations are carried out in double-effect evaporation mode within the same vessel, rather than being carried out in different pans. This reduces cost and complexity and facilitates and simplifies the control of the process.

Secondly, the vapour-spaces of the two chambers of the continuous pan are operated at different pressures. The operation of portions of a conventional continuous pan at two different vacuum pressures is usually costly to carry out, due to the high cost of isolating the two different pressures from each other. Due to the specific design of the double-calandria vertical continuous pan, this mode of operation is greatly simplified.

It is also foreseen that the invention will be implemented very effectively in the applicant's double-calandria vertical continuous pan, as is disclosed in US 6,991,708 as the normally equal sizing of the two chambers of the pan ensure that the vapour produced in the first chamber will closely match the steam requirement of the second chamber. Any mismatch in steam supply/demand can be accommodated by a partial bypass or let-down of steam.

## Claims

1. A continuous vacuum pan (10) including:
a vessel (12) having a first enclosed chamber (14) and a second enclosed chamber (16);
a first heat exchanger (20) located in the first chamber, with a first vapour space (14.2) defined in the first chamber above the first heat exchanger; and
a second heat exchanger (16.2) located in the second chamber, with a second vapour space defined in the second chamber above the second heat exchanger;
the first heat exchanger and the second heat exchanger both having heat transfer medium inlets (20.1, 22.1);
**characterised in that** the heat exchangers are in the form of floating calandrias and the heat transfer medium inlet of the second heat exchanger is in flow communication with the first vapour space, in order for vapour contained in the first vapour space to be conveyed through the second heat exchanger as heat transfer medium.

2. The continuous vacuum pan of claim 1, in which the inlet (20.1) of the first heat exchanger (20) is in flow communication with an external high temperature heat transfer medium.

3. The continuous vacuum pan of claim 2, wherein the heat transfer medium is steam.

4. The continuous vacuum pan of any one of the preceding claims wherein the two chambers (14, 16) are isolated from one another, in order to be operated at different pressures.

## Patentansprüche

1. Verdampfungskristallisationsturm (10), der einschließt:
ein Gefäß (12) mit einer ersten umschlossenen Kammer (14) und einer zweiten umschlossenen Kammer (16);
einen ersten Wärmetauscher (20), der sich in der ersten Kammer befindet, mit einem ersten Dampfraum (14.2), der in der ersten Kammer über dem ersten Wärmetauscher definiert ist; und
einen zweiten Wärmetauscher (16.2), der sich in der zweiten Kammer befindet, mit einem zweiten Dampfraum, der in der zweiten Kammer über dem zweiten Wärmetauscher definiert ist;
wobei der erste Wärmetauscher und der zweite Wärmetauscher beide Einlässe (20.1, 22.1) für Wärmeübertragungsmedium aufweisen;
**dadurch gekennzeichnet, dass** die Wärmetauscher in Form von schwebenden Heizkammern sind und der Einlass für das Wärmeübertragungsmedium des zweiten Wärmetauschers in Strömungskommunikation mit dem ersten Dampfraum ist, um im ersten Dampfraum enthaltenen Dampf als Wärmeübertragungsmedium durch den zweiten Wärmetauscher zu befördern.

2. Verdampfungskristallisationsturm nach Anspruch 1, in dem der Einlass (20.1) des ersten Wärmetauschers (20) in Strömungskommunikation mit einem externen Hochtemperatur-Wärmeübertragungsmedium ist.

3. Verdampfungskristallisationsturm nach Anspruch 2, wobei das Wärmeübertragungsmedium Dampf ist.

4. Verdampfungskristallisationsturm nach einem beliebigen der vorhergehenden Ansprüche, wobei die zwei Kammern (14, 16) zwecks Betrieb mit unterschiedlichen Drücken voneinander isoliert sind.

## Revendications

1. Cuiseur sous vide en continu (10) comprenant :
une cuve (12) ayant une première chambre fermée (14) et une seconde chambre fermée (16) ;
un premier échangeur de chaleur (20) situé dans la première chambre, avec un premier espace de vapeur (14.2) défini dans la première chambre au-dessus du premier échangeur de chaleur ; et
un second échangeur de chaleur (16.2) situé dans la seconde chambre, avec un second espace de vapeur défini dans la seconde chambre au-dessus du second échangeur de chaleur ;
le premier échangeur de chaleur et le second échangeur de chaleur ayant tous les deux des entrées pour milieu de transfert de chaleur (20.1, 22.1) ;
**caractérisé en ce que** les échangeurs de chaleur sont sous la forme de calandres flottantes et **en ce que** l'entrée pour milieu de transfert de chaleur du second échangeur de chaleur est en communication fluidique avec le premier espace de vapeur, pour que la vapeur contenue dans le premier espace de vapeur puisse être transportée jusque dans le second échangeur de chaleur sous la forme d'un milieu de transfert de chaleur.

2. Cuiseur sous vide en continu selon la revendication 1, dans lequel l'entrée (20.1) du premier échangeur de chaleur (20) est en communication fluidique avec un milieu de transfert de chaleur de haute température externe.

3. Cuiseur sous vide en continu selon la revendication 2, dans lequel le milieu de transfert de chaleur est de la vapeur.

4. Cuiseur sous vide en continu selon l'une quelconque des revendications précédentes, dans lequel les deux chambres (14, 16) sont isolées l'une de l'autre, afin de pouvoir fonctionner à différentes pressions.
